# EUROPÄISCHE PATENTANMELDUNG

(11) **EP 4 844 236 A1**
(43) Veröffentlichungstag der Anmeldung: **25.11.2026**
(21) Anmeldenummer: 26177441.8
(22) Anmeldetag: 08.05.2026
(51) Int. Cl.: F16B 12/24

(54) **NICHT LÖSBARE VERBINDUNGSVORRICHTUNG FÜR KLEBEVERBINDUNGEN, INSBESONDERE FÜR HOLZBAUTEILE**

(30) Priorität: 23.05.2025 IT 202500011761
(71) Anmelder: Kamelger, Hartwig, 39039 Niederdorf (IT)
(72) Erfinder: Kamelger, Hartwig, 39039 Niederdorf (IT)
(74) Vertreter: Ausserer, Anton

(57) **Zusammenfassung**

Die Erfindung betrifft eine Verbindungsvorrichtung (100) zwischen zwei Bauteilen, von denen mindestens eines aus Holz besteht, umfassend:
- einen Zapfen, der einen Abschnitt (101) zur Verbindung mit einem ersten Bauteil und einen zweiten Abschnitt (120) zur Verbindung mit einem zweiten Bauteil aufweist
Gemäß der Erfindung weist mindestens ein Abschnitt (101) eine Reihe von Ausweitungen (104) auf,
wobei die Ausweitungen dazu bestimmt sind, in eine in einem Bauteil ausgebildete Aufnahme eingezogen zu werden,

- wobei der Zapfen eine Längsachse (105) aufweist,
- wobei der Abschnitt (101) mit einer Reihe von Erweiterungen (104) mindestens einen gespreizten Einschnitt (103) aufweist und die Wände des gespreizten Einschnitts symmetrisch zur Längsachse des Stifts um α nach außen geneigt sind, wobei α zwischen 1 und 9° liegt,
- und wobei die Ausbuchtungen (104) eine zur Längsachse hin in Richtung des freien Endes des Abschnitts (101) geneigte Fläche aufweisen,
- und wobei die Erweiterungen (104) durch Nuten (106) voneinander getrennt sind und die Erweiterungen (104) eine Unterkante (102) aufweisen und zwischen dem ersten Abschnitt (101) und dem zweiten Abschnitt (120) ein mittlerer Bereich (110) angeordnet ist.

## Beschreibung

Die vorliegende Erfindung betrifft eine nicht lösbare Verbindungsvorrichtung für Klebeverbindungen, insbesondere für Holzbauteile, gemäß dem klassifizierenden Teil des Anspruchs 1.

Verbindungen für Holzbauteile dieser Art sind weithin bekannt und finden breite Anwendung.

Für die Verbindung von Holzbauteilen ist häufig eine schnelle, lösungsmittelfreie Verbindung während der Montage erforderlich, die eine sichere Befestigung ermöglicht, die Dichtigkeit gewährleistet und den Leim stützt, bis dieser aushärtet. Beispielsweise beschreibt die Veröffentlichung EP 1 990 549 A1 ein Verbindungsmittel und ein Verfahren zur Herstellung einer Verbindung zwischen einem ersten Bauteil und einem zweiten Bauteil.

Diese Verbindung wird durch zwei Verbindungselemente hergestellt, die mittels eines speziellen Halteelements miteinander befestigt und gelöst werden können. Diese vorgeschlagene Verbindungselement ist daher in der Herstellung aufwendig und bei der Montage kompliziert, da geeignete Montagewerkzeuge erforderlich sind.

Die Veröffentlichung EP 0 321 062 offenbart eine Holzverbindung mit mindestens zwei Holzelementen, die mit Klebstoff zusammengefügt sind und Bohrungen aufweisen, die auf die festgelegte Position der Verbindung ausgerichtet sind, um Passzapfen aufzunehmen. Ein Distanzstück ist zwischen den Holzelementen angeordnet und erstreckt sich entlang eines begrenzten Teils der Begrenzungsfläche der zu verbindende Elemente. Zwischen dem Umfang des Distanzstücks und zwischen dem Distanzstück und den zu verbindenden Elementen weist der aufgetragene Klebstoff eine Dicke auf, die größer ist als die vom Distanzstück definierte Begrenzungsfläche. Diese Verbindung erfordert daher ein Distanzstück und einen aufwendigen Klebstoffauftrag.

Das Dokument US 3,183,298 beschreibt einen Dübel zum Verbinden zweier Holzelemente, von denen jede fluchtende Bohrung zur Aufnahme des Dübels aufweist. Der Dübel weist konische Abschnitte auf, die sich jeweils zum gegenüberliegenden Ende des Dübels hin erweitern, wenn sie in die entsprechenden Bohrungen der Holzelemente eingeführt werden. Dieser Dübel gewährleistet keine sichere gegenseitige Verankerung zwischen den beiden Elementen und ist nicht in der Lage, die beiden Holzelemente gegenseitig zu belasten, was nützlich ist, um eine eventuell zwischen den beiden Elementen eingefügte Klebstoffschicht zusammenzupressen.

Weitere Möbelverbindungen sind in den Veröffentlichungen EP 0 321 062, US 569,235, US 5,131,783 und US 8,186,124 beschrieben. Alle diese Veröffentlichungen ermöglichen keine gegenseitige Vorspannung zwischen den beiden zu verbindenden Elementen.

DE 72 31 950 U beschreibt ein Möbelverbindungselement, das eine mit einem Gewinde versehene Außenfläche und ein inneres Rastelement aufweist, um die beiden Gewindeteile miteinander zu verbinden. Dieses Möbelverbindungselement muss im Inneren des Möbelstücks eingeschraubt werden und ist daher in der Anwendung aufwendig.

Die EP 3 353 430 beschreibt eine Möbelverbindung, die einen Zapfen umfasst, der einen Abschnitt zur Verbindung mit einem ersten Möbelelement und einen zweiten Abschnitt zur Verbindung mit einem zweiten Möbelelement aufweist,
wobei mindestens ein Abschnitt eine Endausdehnung aufweist,
wobei die Endausdehnung dazu dient, mit einer Hinterschneidung einer im Möbelelement ausgebildeten Aufnahme in Rastverbindung zu treten, wobei der die einrastende Endausdehnung aufweisende Teil des Zapfens mindestens eine Außenfläche aufweist und wobei die Außenfläche gegenüber der Längsachse des Zapfens geneigt ist, um eine Zugkraft zu erzeugen, die die Möbelelemente zusammenpresst, oder um einen Druck zwischen den Möbelelementen zu erzeugen, während des Einrastens durch das Aufspreizen des nach außen geneigten Zapfens,
wobei die Auflagefläche der Endausdehnung einen Winkel zwischen 10 und 30 Grad im Vergleich zur Oberfläche einer Aufnahme im Möbelelement aufweist, wobei die Endausdehnung mindestens zwei axiale Kerben aufweist.

Diese Verbindung erfordert eine Aufnahme mit einer Hinterschneidung, um die Verbindung herzustellen,
Aufgabe der vorliegenden Erfindung ist daher die Herstellung einer Verbindung zweier Elemente mit einer unlösbaren Fixierung in der Verbindungsposition, die eine hohe Stabilität und Zugfestigkeit zwischen den beiden Möbelteilen gewährleistet, bis der Klebstoff aushärtet/aktiviert wird.

Diese Aufgabe wird durch eine Verbindungsvorrichtung mit den Merkmalen des charakteristischen Teils von Anspruch 1 erreicht.

Es wird daher eine Verbindungsvorrichtung zwischen zwei Bauteilen vorgeschlagen, von denen mindestens eines aus Holz besteht, umfassend:
- einen Zapfen, der einen mit einem ersten Bauteil zu verbindender Abschnitt und einen mit einem zweiten Bauteil zu verbindender zweiter Abschnitt aufweist,
- wobei mindestens ein Abschnitt eine Reihe von Ausdehnungen aufweist,
   wobei die Ausdehnungen dazu bestimmt sind, in eine in einem Bauteil ausgebildete Aufnahme einzugreifen,
- wobei der Zapfen eine Längsachse aufweist,
- wobei der Abschnitt mit einer Reihe von Ausdehnungen mindestens einen gespreizten Einschnitt aufweist (und die Wände des gespreizten Einschnitts symmetrisch zur Längsachse des Zapfens um α nach außen geneigt sind, wobei α zwischen 1 und 9° liegt),
- und wobei die Ausdehnungen eine zur Längsachse hin in Richtung des freien Endes des Abschnitts geneigte Fläche aufweisen,
und wobei die Ausdehnungen durch Nuten voneinander getrennt sind und die Ausdehnungen vorteilhafterweise eine Unterkante aufweisen, wobei die Unterkante der geneigten Fläche der Ausdehnungen gekrümmte Einschnitte aufweist, die an ihrem Schnittpunkt Spitzen bilden, die in das Bauteil eingreifen können.

Gemäß der Erfindung sind die Ausdehnungen mindestens drei.

Vorteilhafterweise weist die Außenfläche dieselbe Neigung auf wie die Innenfläche, insbesondere die durch die übereinanderliegenden, ausgerichteten Spitzen gebildete Linie.

In einem ersten Schritt wird in ein Loch, insbesondere ein Sackloch, im Bauteil Klebstoff eingebracht und anschließend ein Abschnitt des Zapfens eingeführt. Dieser Abschnitt kann auch mit Kraft, beispielsweise mit einem Hammer, in das Loch eingetrieben werden. Anschließend wird in das zweite Bauteil, das ebenfalls ein Loch, insbesondere ein Sackloch, aufweist, Klebstoff eingebracht; vorteilhafterweise wird auch um die Löcher an beiden Bauteilen herum Klebstoff eingebracht,
dann wird der Abschnitt mit den Ausdehnungen und der Spreizung in das zweite Loch eingeführt und die beiden Bauteile werden gegeneinander gedrückt, auch mittels einer Maschine; auf diese Weise wird der Abschnitt eingeführt und durch die elastische Kraft drücken die Ausdehnungen die Spitzen in das Material und halten die Bauteile in Position, bis der Klebstoff aushärtet.

Weitere Merkmale und Details ergeben sich aus den Ansprüchen und der folgenden Beschreibung von Ausführungsformen, die in der beigefügten Zeichnung dargestellt sind, in der
Figur 1a eine Seitenansicht einer Verbindungsvorrichtung gemäß der Erfindung,
Figur 1b eine zweite Seitenansicht einer Verbindungsvorrichtung gemäß der Erfindung
in Figur 2a eine Seitenansicht einer Verbindungsvorrichtung gemäß der Erfindung,
in Figur 2b eine zweite Seitenansicht einer Verbindungsvorrichtung gemäß der Erfindung

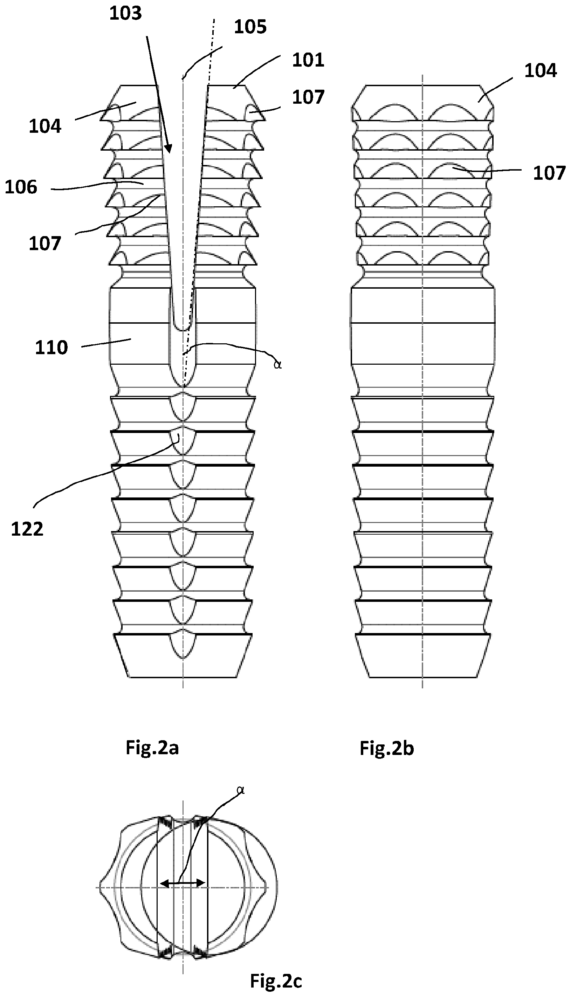

in Figur 2b eine zweite Draufsicht auf eine Verbindungsvorrichtung gemäß der Erfindung

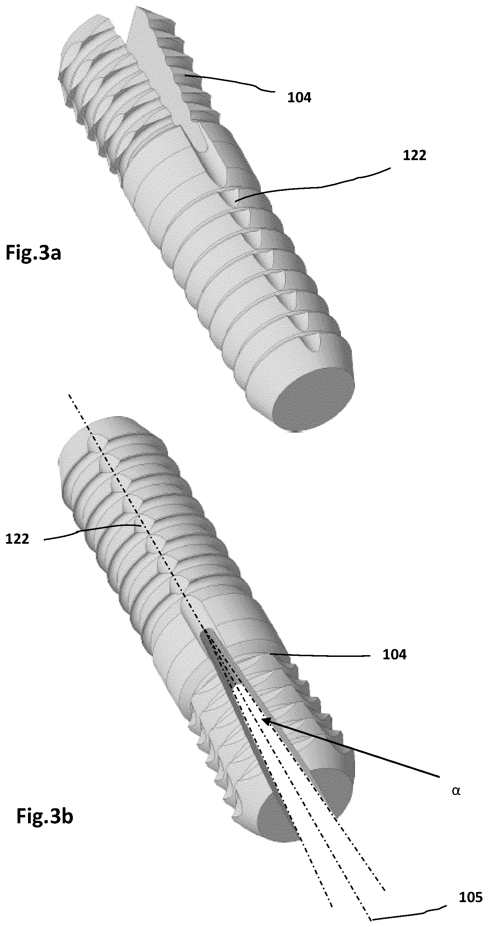

Abbildung 3a eine perspektivische Ansicht einer Verbindungsvorrichtung gemäß der Erfindung und
Abbildung 3b eine zweite perspektivische Ansicht einer Verbindungsvorrichtung gemäß der Erfindung,

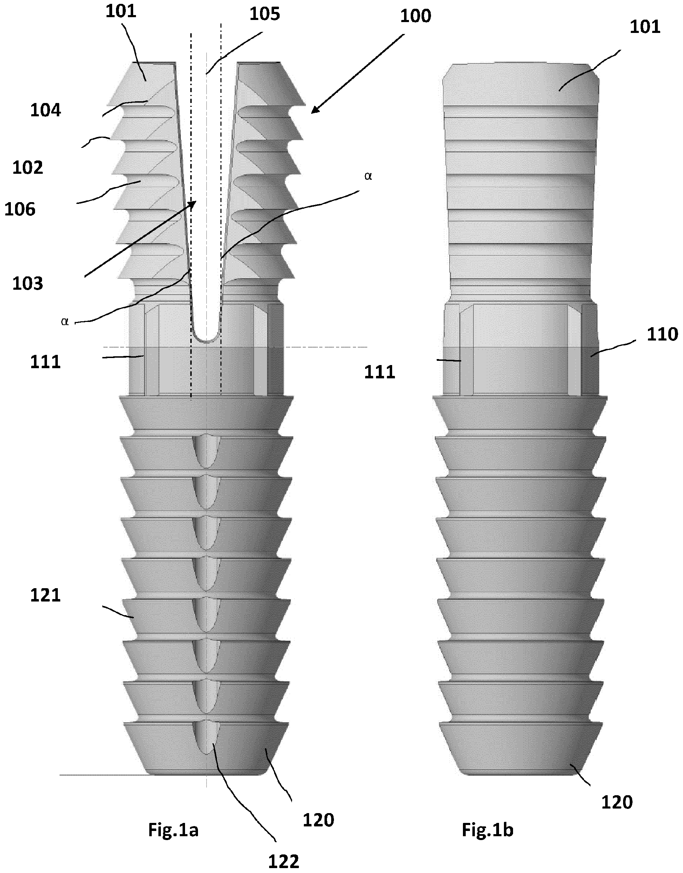

In Abbildung 1 ist eine Verbindungsvorrichtung zwischen zwei Bauteilen mit der Bezugsziffer 100 bezeichnet. Die Vorrichtung 100 umfasst einen Zapfen, der einen mit einem ersten Bauteil zu verbindenden Abschnitt 101 und einen mit einem zweiten Bauteil zu verbindenden zweiten Abschnitt 120 aufweist. Vorteilhafterweise bestehen beide Bauteile aus Holz und weisen Sacklöcher auf, in die die Abschnitte des Zapfens 101, 120 eingeführt werden.

In die Bohrungen wird vorteilhafterweise ein Klebstoff eingebracht, vorteilhafterweise auch auf die an die Bohrungen angrenzenden Flächen.

Der Klebstoff fixiert den Zapfen und verbindet somit die Bauteile miteinander.

Von der Vorrichtung 100 weist mindestens ein Abschnitt 101 eine Reihe von Ausdehnungen 104 auf, d. h. Erhebungen, die auf der Außenfläche des Abschnitts 101 angeordnet sind. Die Anzahl der Ausdehnungen104 bestimmt die Kontaktpunkte mit der Wand der Bohrungen.

Die Ausdehnungen104, die dazu bestimmt sind, in eine in dem Bauteil ausgebildete Aufnahme eingezogen zu werden, sind vorteilhafterweise mindestens drei, besonders vorteilhafterweise mindestens fünf Ausdehnungen104,
Der Zapfen weist eine Längsachse 105 auf.

Der Abschnitt mit einer Reihe von Ausdehnungen 104 weist mindestens einen gespreizten Einschnitt 103 auf, und die Wände des gespreizten Einschnitts sind symmetrisch zur Längsachse des Zapfens um α nach außen geneigt, wobei α zwischen 1 und 9° liegt.

Diese Spreizung ermöglicht es, die Seitenwände der Ausdehnung 101 zusammenzudrücken und so eine Kraft zu erzeugen, durch die die Ausdehnungen gegen die Wand des Sitzes/der Bohrung des Bauteils drücken.

Gemäß der Erfindung weisen die Ausdehnungen 104 eine zur Längsachse hin in Richtung des freien Endes des Abschnitts geneigte Fläche auf; dies ermöglicht ein leichteres Einführen und verhindert ein Verklemmen während des Einführens.

Gemäß der Erfindung sind die Ausdehnungen n 104 durch Nuten 106 voneinander getrennt. Diese Nuten 106 erhöhen die Elastizität der Ausdehnungen 104 und ermöglichen zudem eine bessere Verteilung des Klebstoffs in der Aufnahme/Bohrung.

Die Unterkante 102 der geneigten Fläche der Ausdehnungen weist gekrümmte Einschnitte 107 auf, die an ihrem Schnittpunkt Spitzen bilden, die in das Bauteil eingreifen können und durch die Spreizung elastisch belastet werden.

Vorteilhafterweise befindet sich zwischen den beiden Abschnitten 101 und 120 ein massiver Mittelbereich 110, der dem Zapfen Stabilität verleiht und Erhebungen 111 aufweist, die in das Bauteil eingreifen können und im Wesentlichen in Längsrichtung angeordnet sind.

Der zweite Abschnitt 120 weist vorteilhafterweise eine Reihe von Erhebungen/Ausdehnungen 121 auf, die in die Aufnahme/Bohrung eines Bauteils eingepresst werden. Die Ausdehnungen 121 werden zusammengedrückt und mit Kraft in die Aufnahme/Bohrung des Bauteils eingeführt.

Vorteilhafterweise ist zudem entlang des gesamten Zapfens in Längsrichtung, im Wesentlichen fluchtend mit der Kerbe, eine Nut 122 vorhanden, die das Fließen des Klebstoffs ermöglicht; vorteilhafterweise sind diese Nuten 122 zwei an zwei gegenüberliegenden Seiten des Zapfens angeordnet.

Durch die Verbindungsvorrichtung 100 wird eine Verbindung von zwei Bauteilen wobei mindestens ein Bauteil aus Holz besteht hergestellt. Die Verbindung umfasst die Verbindungsvorrichtung 100 und Klebstoff.

Es gibt zahlreiche Möglichkeiten, Varianten und Vorschläge zum Schutzumfang des Gegenstands gemäß der Erfindung, wie er in den folgenden Ansprüchen definiert ist, vorzusehen. Die einzelnen Schritte des Verfahrens gemäß der Erfindung können in ihrer Reihenfolge variiert werden, ohne dabei den Umfang der Erfindung zu verlassen.

### Liste der Bezugszeichen

- 100: Verbindungsvorrichtung
- 101: Abschnitt des Zapfens
- 102: Unterkante der Ausdehnung
- 103: Spreizöffnung/Spreizschnitt/ gespreizten Einschnitt
- 104: Ausdehnung
- 105: Längsachse des Zapfens
- 106: Nut
- 107: gekrümmte Einschnitte
- 110: mittlerer Bereich
- 111: Erhebungen
- 120: Teil des Zapfens
- 121: Erhebungen
- 122: eine Nut

- α: Neigung zur Längsachse

## Patentansprüche

1. Verbindungsvorrichtung (100) zwischen zwei Bauteilen, umfassend:
- einen Zapfen, der einen Abschnitt (101) zur Verbindung mit einem ersten Bauteil und einen zweiten Abschnitt (120) zur Verbindung mit einem zweiten Bauteil aufweist, **dadurch gekennzeichnet, dass**
mindestens ein Abschnitt (101) eine Reihe von Ausdehnungen (104) aufweist,
wobei die Ausdehnungen dazu bestimmt sind, in eine in einem Bauteil ausgebildete Aufnahme eingezogen zu werden,
- wobei der Zapfen eine Längsachse (105) aufweist,
- wobei der Abschnitt (101) mit einer Reihe von Ausdehnungen (104) mindestens einen gespreizten Einschnitt (103) aufweist und die Wände des gespreizten Einschnitts symmetrisch zur Längsachse des Zapfens um α nach außen geneigt sind, wobei α zwischen 1 und 9° liegt,
- und wobei die Ausdehnungen (104) eine zur Längsachse hin in Richtung des freien Endes des Abschnitts (101) geneigte Fläche aufweisen,
- und wobei die Ausdehnungen (104) durch Nuten (106) voneinander getrennt sind und die Ausdehnungen (104) eine Unterkante (102) aufweisen und zwischen dem ersten Abschnitt (101) und dem zweiten Abschnitt (120) ein mittlerer Bereich (110) angeordnet ist.

2. Verbindungsvorrichtung (100) zwischen zwei Bauteilen, gemäß Anspruch 1, **dadurch gekennzeichnet, dass** die Unterkante (102) der geneigten Fläche der Ausdehnungen (104) gekrümmte Einschnitte (107) aufweist, die an ihrem Schnittpunkt Spitzen bilden, die in das Bauteil eingreifen können.

3. Verbindungsvorrichtung (100) zwischen zwei Bauteilen, gemäß Anspruch 1 oder 2, **dadurch gekennzeichnet, dass** der mittlere Bereich (110) Erhebungen (111) aufweist, um ein Verdrehen der Verbindungsvorrichtung (100) zu verhindern.

4. Verbindungsvorrichtung (100) zwischen zwei Bauteilen, gemäß einem der vorstehenden Ansprüche, **dadurch gekennzeichnet, dass** die Ausdehnungselemente (104) mindestens drei sind, vorzugsweise vier.

5. Verbindungsvorrichtung (100) zwischen zwei Bauteilen gemäß einem der vorstehenden Ansprüche, **dadurch gekennzeichnet, dass** sich mindestens eine Nut (122) entlang des ersten Abschnitts (101) und des zweiten Abschnitts (120) erstreckt.

6. Verbindung von zwei Bauteilen wobei mindestens ein Bauteil aus Holz besteht **dadurch gekennzeichnet, dass** die Verbindung die Verbindungsvorrichtung (100) nach einem der vorhergehenden Ansprüche und Klebstoff umfasst.
